# EUROPÄISCHE PATENTANMELDUNG

(11) **EP 0 628 371 A2**
(43) Veröffentlichungstag der Anmeldung: **14.12.1994**
(21) Anmeldenummer: 94108979.9
(22) Anmeldetag: 10.06.1994
(51) Int. Cl.: B23K 11/31, B23K 11/28

(54) **Manuell betätigbare Punktschweisszange**

(30) Priorität: 11.06.1993 DE 9308650 U
(71) Anmelder: ELEKTRON-BREMEN Fabrik für Elektrotechnik GmbH, D-28197 Bremen (DE)
(72) Erfinder: Goldgrabe, Richard, D-28211 Bremen (DE)
(74) Vertreter: Möller, Friedrich, Dipl.-Ing.

(57) **Zusammenfassung**

Ein Anwendungsgebiet manuell betätigbarer Punktschweißzangen ist das Zusammenschweißen von Blechen im Karosseriebau. Die Schweißelektroden (18, 19) sollen mit einem Mindestdruck an den zu verbindenden Blechen anliegen. Hierzu ist eine Bewegung der Schweißelektroden gegeneinander erforderlich. Entsprechend muß der Abstand der Elektroden veränderbar sein.

Erfindungsgemäß ist vorgesehen, daß eine zwischen den Schweißelektroden (18, 19) liegende Schweißebene (20) etwa senkrecht zur Haupterstreckungsrichtung der Elektrodenhalter (12, 13) bzw. zum Gehäuse verläuft. Außerdem ist ein Elektrodenhalter (12) in seiner Längsrichtung gegen einen Federdruck und etwa senkrecht zur Schweißebene (20) im Zangengehäuse (11) (manuell) bewegbar.

## Beschreibung

Die Erfindung betrifft eine Zange zum Punktschweißen und für manuelle Betätigung, mit in einem Zangengehäuse gelagerten stabförmigen Elektrodenhaltern und an benachbarten Enden der Elektrodenhalter angeordneten Schweißelektroden.

Derartige Zangen werden im Karosseriebau, insbesondere in Reparaturbetrieben zum Elektroschweißen verwendet. Bevorzugtes Anwendungsgebiet ist das Zusammenschweißen von Blechen. Zangen zum Punktschweißen werden entweder manuell betätigt oder unter Verwendung einer Hilfskraft, beispielsweise mit pneumatischer Unterstützung. Bewegt werden müssen die Elektrodenhalter mit den Schweißelektroden. Letztere sollen möglichst unter einem bestimmten Mindestdruck beidseitig der zu verbindenden Bleche anliegen. Die Bewegung der Elektroden gegeneinander soll auf einfache Weise möglich sein.

Aufgabe der vorliegenden Erfindung ist es, eine Zange der eingangs genannten Art zu schaffen, bei der der Abstand zwischen den Elektroden auf einfache Weise veränderbar ist.

Zur Lösung der Aufgabe sind erfindungsgemäß folgende Merkmale vorgesehen:
- Eine zwischen den Schweißelektroden liegende Schweißebene verläuft etwa senkrecht zur Haupterstreckungsrichtung der Elektrodenhalter bzw. zum Gehäuse,
- zumindest ein (der erste) Elektrodenhalter ist in seiner Längsrichtung gegen einen Federdruck und etwa senkrecht zur Schweißebene im Zangengehäuse (manuell) bewegbar.

Der Abstand der Elektroden voneinander kann auf diese Weise schnell und einfach verringert werden. Zugleich können die Elektroden die zu verschweißenden Bleche unter Druck beaufschlagen. Besonders vorteilhaft ist, daß die Elektroden durch die Bewegung senkrecht zur Schweißebene in ihrer axialen Ausrichtung zueinander unverändert bleiben.

Eine vorteilhafte Weiterbildung der Erfindung ist durch folgende Merkmale gekennzeichnet:
- Die beiden Elektrodenhalter sind zumindest teilweise im Zangengehäuse etwa parallel zueinander angeordnet,
- vorzugsweise ist auch der zweite Elektrodenhalter in seiner Längsrichtung gegen einen Federdruck und etwa senkrecht zur Schweißebene gegenüber dem Zangengehäuse bewegbar.

Die Anordnung und Führung der Elektrodenhalter im Zangengehäuse wird durch diese Anordnung wesentlich vereinfacht.

Schließlich ist eine andere Weiterbildung der Erfindung durch folgende Merkmale gekennzeichnet:
- Zur Überbrückung des Abstands der Elektroden voneinander ist der erste Elektrodenhalter in seiner Längsrichtung (manuell) senkrecht zur Schweißebene bewegbar, vorzugsweise mit seiner Elektrode in Richtung auf das Zangengehäuse,
- bei Anlage der Elektrode des ersten Elektrodenhalters an einem Werkstück und damit zugleich mittelbar an der benachbarten Elektrode des zweiten Elektrodenhalters sind beide Elektrodenhalter in derselben Richtung senkrecht zur Schweißebene weiterbewegbar.

Dadurch ist es möglich, einen eventuell erforderlichen Druck allein durch aktive Bewegung des ersten Elektrodenhalters aufzubauen. Eine aktive Gegenbewegung des zweiten Elektrodenhalters ist nicht erforderlich.

Weitere Merkmale der Erfindung ergeben sich aus den übrigen Ansprüchen. Bevorzugte Ausführungsbeispiele der Erfindung werden im folgenden anhand von Zeichnungen näher erläutert. Es zeigen:
- Fig. 1: eine erfindungsgemäße Zange in der Draufsicht,
- Fig. 2: eine Innenansicht der Zange gemäß Fig. 1 in schematischer Darstellung,
- Fig. 3: eine Steckverbindung zwischen Elektrode und Elektrodenhalter in teilweise geschnittener Darstellung,
- Fig. 4: die Zange gemäß Fig. 1 mit einer Darstellung der Kühlluftführung.

Bevorzugtes Anwendungsgebiet der Erfindung ist das Punktschweißen von Blechen. Verwendet wird hierfür beispielsweise eine Punktschweißzange mit separatem Schweißtransformator und zugehörigem Steuergerät. Letzteres regelt den Schweißstrom und die Schweißdauer. Die Bedienungsperson muß insbesondere den Schweißbeginn auslösen, etwa durch einen Schalter an der Punktschweißzange.

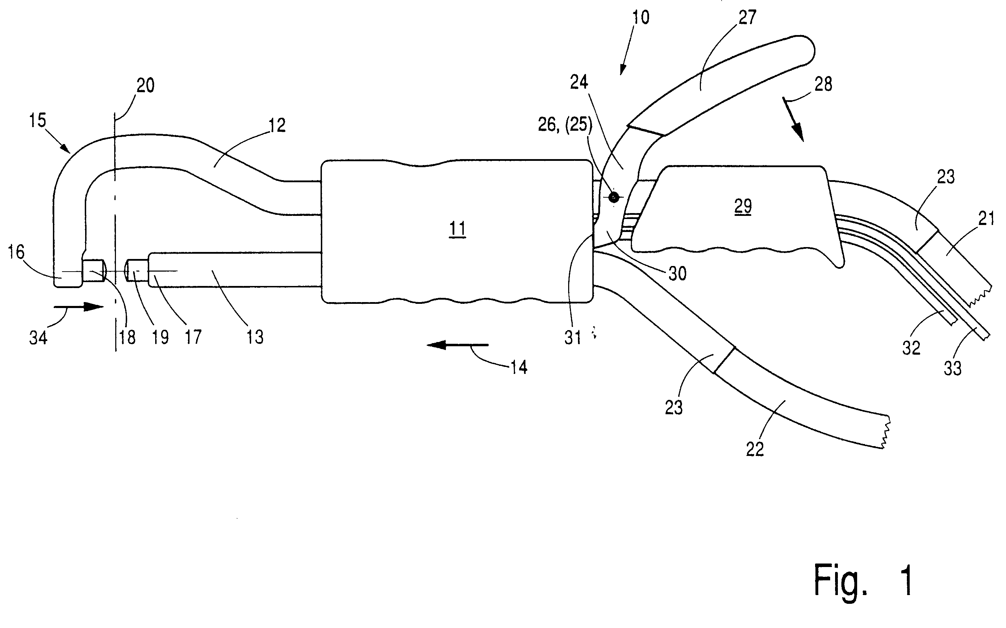

Zur Erläuterung eines Ausführungsbeispiels der Erfindung wird zunächst Bezug genommen auf Fig. 1. Eine Zange 10 zum Punktschweißen von beispielsweise Karosserieblechen weist ein Zangengehäuse 11 sowie zum Teil hierin gelagerte Elektrodenhalter 12, 13 auf. Diese sind zueinander parallel angeordnet und verlaufen etwa in Richtung einer Haupterstreckungsrichtung - Pfeil 14 - des Zangengehäuses 11 bzw. definieren eine solche Richtung zusammen mit dem Zangengehäuse 11. Dabei tritt der erste Elektrodenhalter 12 in Richtung des Pfeils 14 aus dem Zangengehäuse 11 aus, bildet eine hakenförmige Krümmung 15 und liegt mit einem Ende 16 vor einem Ende 17 des zweiten Elektrodenhalters 13. Letzterer tritt ebenfalls in Richtung des Pfeils 14 aus dem Zangengehäuse 11 aus und erstreckt sich in gerader Richtung weiter in Richtung auf das Ende 16. In die Enden 16, 17 sind Elektroden 18, 19 eingesetzt. Zwischen diesen liegt im Ruhezustand ein gewisser Abstand und zugleich eine Schweißebene 20 (Strich-Punkt-Linie). Die Haupterstreckungsrichtung 14 der Zange verläuft etwa senkrecht zur Schweißebene 20.

An einem den Elektroden 18, 19 gegenüberliegenden Bereich des Zangengehäuses 11 treten die Elektrodenhalter 12, 13 aus. Es sind jeweils Schweißkabel 21, 22 angeschlossen. Diese führen zu einem nicht gezeigten Schweißtransformator.

Die Elektrodenhalter 12, 13 sind hohl ausgeführt. Die Schweißkabel 21, 22 sind in die Elektrodenhalter 12, 13 hineingeführt und mit diesen durch Quetschung verbunden. Aufgrund des vorzugsweise verwendeten Kupfermaterials für die Elektrodenhalter 12, 13 und der üblichen Litze für Schweißkabel ist eine derartige Quetschverbindung 23 trotz größerer Querschnitte und Wandstärken relativ leicht herstellbar.

Der erste Elektrodenhalter 12 ist zwischen der Quetschverbindung 23 und dem Zangengehäuse 11 - benachbart zum Zangengehäuse - mit einem zweiarmigen Hebel 24 versehen. Ein Hebelgelenk 25 ermöglicht eine Drehung des Hebels 24 gegenüber dem Elektrodenhalter 12. Zu diesem Zweck ist das Hebelgelenk 25 beispielsweise als durch den Hebel 24 und den Elektrodenhalter 12 durchgehender Stift 26 ausgebildet. Ein Hebelarm, im folgenden als Griffhebel 27 bezeichnet, ist gegen einen der Quetschverbindung 23 zugewandten Teil des Elektrodenhalters 12 bewegbar, in Richtung des Pfeils 28. In eben diesem Bereich ist auf dem Elektrodenhalter 12 ein Griffteil 29 angeordnet.

Ein anderer Hebelarm, im folgenden als Druckhebel 30 bezeichnet, drückt gegen eine Stirnfläche 31 des Zangengehäuses 11. Der Hebel 24 ist insgesamt als Gabel mit zwei Schenkeln ausgeführt, wobei letztere den Druckhebel 30 bilden, in der Fig. 1 übereinanderliegen und demnach nicht beide sichtbar sind. Zwischen den Schenkeln ist aber genügend Raum zur Durchführung des Elektrodenhalters 12, sowie einer Luftleitung 32 und einer Steuerleitung 33. Die beiden letztgenannten Leitungen 32, 33 sind zugleich auch durch das Griffteil 29, parallel zum Elektrodenhalter 12, hindurchgeführt.

Bei einer Bewegung des Griffhebels 27 in Richtung des Pfeils 28 wird das Zangengehäuse 11 relativ zum ersten Elektrodenhalter 12 bewegt bzw. bei feststehendem Zangengehäuse wird der Elektrodenhalter 12 in Richtung des Pfeils 34 bewegt. Bei Anlage der Elektrode 18 an der Elektrode 19 und bei weiterer Bewegung des Griffhebels 27 in Richtung des Pfeils 28 wird schließlich auch der zweite Elektrodenhalter 13 in Richtung des Pfeils 34 relativ zum Zangengehäuse 11 bewegt. Dementsprechend sind beide Elektrodenhalter 12, 13 im Zangengehäuse 11 gegen die Richtung des Pfeils 14 verschiebbar angeordnet.

Die beschriebene Konstruktion ist besonders leicht, raumsparend und klein. Die Bewegung der Elektroden 18, 19 gegeneinander verläuft stets in axialer Richtung zueinander. Die vorgesehene Mechanik zur Bewegung der Elektrodenhalter ist wenig aufwendig und zugleich robust.

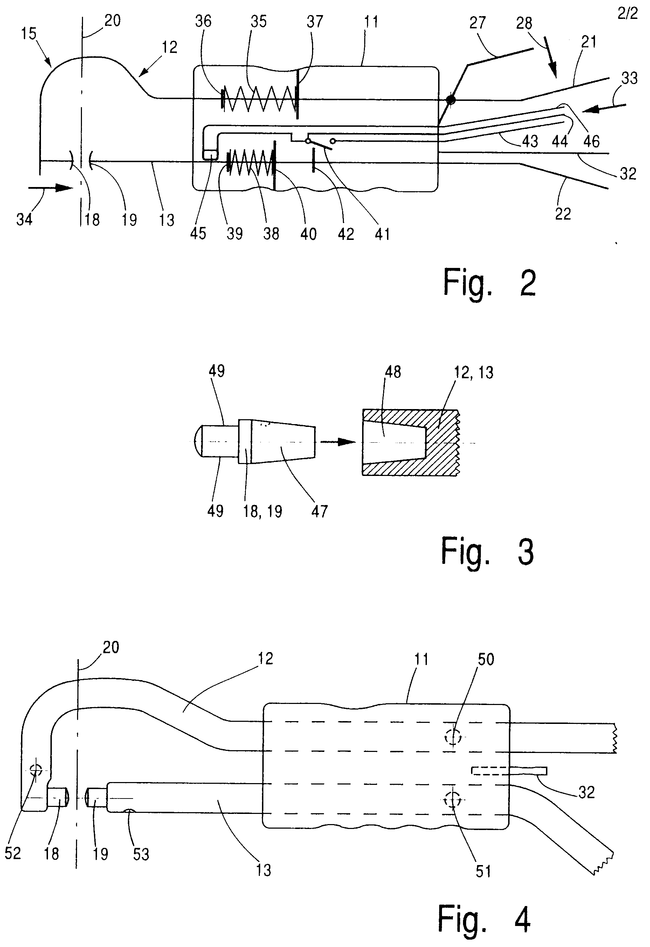

Fig. 2 zeigt eine schematische Darstellung des Innenlebens der Zange 10. Der Elektrodenhalter 12 ist im Zangengehäuse 11 gegen den Druck einer Feder 35 axial verschiebbar. Hierzu weist der Elektrodenhalter 12 einen Mitnehmer 36 und das Zangengehäuse 11 einen Haltesteg 37 auf. Die Feder 35 ist im vorliegenden Fall als Druckfeder ausgebildet.

Analog hierzu ist der Elektrodenhalter 13 gegen den Druck einer Feder 38 verschiebbar. Ein entsprechender Mitnehmer und ein Haltesteg sind mit 39 bzw. 40 bezeichnet. Die Feder 38 ist härter als die Feder 35. Dadurch ist sichergestellt, daß bei einer Bewegung des Griffhebels 27 in Richtung des Pfeils 28 zunächst der Elektrodenhalter 12 und erst dann der Elektrodenhalter 13 relativ zum Zangengehäuse 11 bewegt werden. Besonderer Hintergrund hierfür ist ein Schalter 41 der durch einen Mitnehmer 42 des Elektrodenhalters 13 betätigbar ist. Zuleitungen 43, 44 des Schalters 41 gehören zur Steuerleitung 33 und sind aus dem Zangengehäuse 11 herausgeführt. Bei Betätigung des Schalters 41 wird im nicht gezeigten Schweißtransformator der eigentliche Schweißvorgang ausgelöst. Die Federn 35, 38 sowie die zugehörigen geometrischen Verhältnisse sind so ausgewählt, daß der Schalter 41 nur betätigbar ist, wenn zwischen den Elektroden 18, 19 zumindest der Anfangsdruck der Feder 38 vorliegt. Dadurch ist es möglich, den Schweißvorgang in Abhängigkeit von einem bestimmten Druck zwischen den Elektroden 18, 19 auszulösen, unabhängig von der Geschicklichkeit der den Griffhebel 27 bewegenden Bedienungsperson. Das sogenannte Pratzen beim Schweißvorgang wird dadurch sicher vermieden.

Als Temperatursicherung ist ein Thermoschalter 45 fest im Zangengehäuse 11 eingebaut, und zwar so, daß der Elektrodenhalter 13 gleitend hieran vorbeibewegbar ist. Bei Überschreiten einer bestimmten Temperatur gelangt ein Signal über die Zuleitung 46 an den Schweißtrafo und verhindert eine Auslösung des Schweißvorgangs.

Fig. 3 zeigt die Steckverbindung zwischen Elektrodenhalter 12, 13 und Elektroden 18, 19. Letztere weisen einen Kegel 47 zum Einsatz in eine entsprechend geformte Aufnahme 48 im Elektrodenhalter 12 bzw. 13 auf. Der Kegel 47 weist eine Verjüngung im Verhältnis 1:10 auf (Durchmesserdifferenz geteilt durch Länge). Die Aufnahme 48 ist ebenso ausgebildet. Fertigungsbedingte Abweichungen zwischen 1:9,5 und 1:10,5 sind möglich. Wichtig ist, daß Kegel 47 und Aufnahme 48 jeweils die gleiche Kegelform aufweisen. Nur so ist ein inniger Kontakt über einen großen Querschnitt gewährleistet. Die Elektroden 18, 19 werden einfach in die Elektrodenhalter 12, 13 eingedrückt. Zum Herausnehmen erfolgt eine Drehung über einen Gabelschlüssel. Hierzu weisen die Elektroden 18, 19 entsprechende Schlüsselflächen 49 auf. Die beschriebene Kegelform mit dem ganz speziellen Kegelverhältnis von 1:10 ist für die vorgesehene Anwendung, das heißt das einfache Einsetzen und leichte Abnehmen, besonders gut geeignet.

Fig. 4 zeigt eine weitere Besonderheit. Die Elektrodenhalter 12, 13 sind luftgekühlt. Zu diesem Zweck sind sie nach Art eines Rohres hohl ausgebildet. Dem Zangengehäuse 11 wird über die Luftleitung 32 Luft mit geringem Überdruck zugeführt. Ein entsprechender Druckminderer sitzt außerhalb des Zangengehäuses 11 und ist nicht gezeigt. Die Elektrodenhalter 12, 13 weisen jeweils Öffnungen 50, 51 auf, die innerhalb des Zangengehäuses 11 sitzen. Die in die Öffnungen 50, 51 einströmende Luft gelangt bis nahe an die Elektroden 18, 19 und tritt dort über Öffnungen 52, 53 aus den Elektrodenhaltern 12, 13 wieder aus. Zu den Schweißkabeln hin sind die Elektrodenhalter 12, 13 durch die Quetschverbindungen 23 abgedichtet. Das Zangengehäuse 11 ist zweischalig ausgebildet. Austretende Leckluft, auch im Bereich der Elektrodenhalter 12, 13, ist bei ausreichender Luftzufuhr über die Leitung 32 unbeachtlich. Die beschriebene Anordnung gewährleistet eine einfache Dauerkühlung der thermisch belasteten Teile einschließlich des Zangengehäuses 11.

## Patentansprüche

1. Zange zum Punktschweißen und für manuelle Betätigung, mit in einem Zangengehäuse (11) gelagerten stabförmigen Elektrodenhaltern (12, 13) und an benachbarten Enden (16, 17) der Elektrodenhalter (12, 13) angeordneten Schweißelektroden (18, 19), gekennzeichnet durch folgende Merkmale:
- eine zwischen den Schweißelektroden (18, 19) liegende Schweißebene (20) verläuft etwa senkrecht zur Haupterstreckungsrichtung (Pfeil 14) der Elektrodenhalter (12, 13) bzw. zum Gehäuse (11),
- zumindest ein (der erste) Elektrodenhalter (12) ist in seiner Längsrichtung gegen einen Federdruck und etwa senkrecht zur Schweißebene (20) im Zangengehäuse (11) (manuell) bewegbar.

2. Zange nach Anspruch 1, gekennzeichnet durch folgende Merkmale:
- die beiden Elektrodenhalter (12, 13) sind zumindest teilweise im Zangengehäuse (11) etwa parallel zueinander angeordnet,
- vorzugsweise ist auch der zweite Elektrodenhalter (13) in seiner Längsrichtung gegen einen Federdruck und etwa senkrecht zur Schweißebene (20) gegenüber dem Zangengehäuse (11) bewegbar.

3. Zange nach Anspruch 1 oder 2, gekennzeichnet durch folgende Merkmale:
- zur Überbrückung des Abstands der Elektroden (18, 19) voneinander ist der erste Elektrodenhalter (12) in seiner Längsrichtung (manuell) senkrecht zur Schweißebene (20) bewegbar, vorzugsweise mit der Elektrode (18) in Richtung auf das Zangengehäuse (11),
- bei Anlage der Elektrode (18) des ersten Elektrodenhalters (12) an einem Werkstück und damit zugleich mittelbar an der benachbarten Elektrode (19) des zweiten Elektrodenhalters (13) sind beide Elektrodenhalter in derselben Richtung senkrecht zur Schweißebene (20) weiterbewegbar.

4. Zange nach Anspruch 2 oder 3, dadurch gekennzeichnet, daß der Federdruck gegen den zweiten Elektrodenhalter (13) größer ist als gegen den ersten Elektrodenhalter (12).

5. Zange nach einem oder mehreren der Ansprüche 1 bis 4, gekennzeichnet durch folgende Merkmale:
- einem der Elektrodenhalter (12, 13) ist ein Schalter (41) zum Auslösen des Schweißvorgangs zugeordnet, insbesondere für eine an einen Schweißtrafo angeschlossene Steuerleitung (33),
- vorzugsweise ist der Schalter (41) dem zweiten Elektrodenhalter (13) zugeordnet und durch diesen bei Bewegung desselben betätigbar.

6. Zange nach einem oder mehreren der Ansprüche 1 bis 5, gekennzeichnet durch folgende Merkmale:
- vorzugsweise ist der erste Elektrodenhalter (12) durch das Zangengehäuse (11) hindurchgeführt und mit einem Hebel (24) in seiner Längsrichtung (Pfeil 14) gegen das Zangengehäuse (11) bewegbar,
- dabei ist der Hebel (24) mit dem Zangengehäuse (11) oder dem ersten Elektrodenhalter (12) gelenkig verbunden und stützt sich mit einem Hebelarm (Druckhebel 30) am jeweils anderen Teil (Zangengehäuse oder Elektrodenhalter), vorzugsweise am Zangengehäuse (11), ab.

7. Zange nach einem oder mehreren der Ansprüche 1 bis 6, dadurch gekennzeichnet, daß zumindest einer der Elektrodenhalter (12, 13), vorzugsweise beide, sich in gerader Linie und etwa parallel zueinander durch das Zangengehäuse (11) hindurcherstrecken.

8. Zange zum Punktschweißen und vorzugsweise für manuelle Betätigung, mit einem Zangengehäuse (11) und zwei darin gelagerten Elektrodenhaltern (12, 13), insbesondere nach einem oder mehreren der Ansprüche 1 bis 7, dadurch gekennzeichnet, daß die Elektrodenhalter (12, 13) (zumindest einer) hohl ausgebildet und vorzugsweise bis etwa zu an den Enden (16, 17) der Elektrodenhalter (12, 13) angeordneten Elektroden (18, 19) von (Kühl-)Luft durchströmbar sind.

9. Zange nach Anspruch 8, dadurch gekennzeichnet, daß das Zangengehäuse (11) an eine Luftzufuhr angeschlossen ist und die Elektrodenhalter (12, 13) im Innern des Zangengehäuses (11) Öffnungen (50, 51) zum Eintritt der Luft sowie entsprechende Öffnungen (52, 53) zum Austritt der Luft außerhalb des Zangengehäuses (11) aufweisen.

10. Zange zum Punktschweißen und vorzugsweise für manuelle Betätigung, mit einem Zangengehäuse (11) und zwei darin gelagerten Elektrodenhaltern (12, 13), insbesondere nach einem oder mehreren der Ansprüche 1 bis 9, dadurch gekennzeichnet, daß im Zangengehäuse (11) ein Thermoschalter (45) angeordnet ist, der eine Auslösung des Schweißstromes verhindern kann, und der vorzugsweise fest im Zangengehäuse (11) gelagert ist, während er (der Thermoschalter 45) gegenüber einem der Elektrodenhalter (12, 13) gleitend angeordnet ist.

11. Zange zum Punktschweißen und vorzugsweise für manuelle Betätigung, mit einem Zangengehäuse (11) und zwei darin gelagerten Elektrodenhaltern (12, 13), insbesondere nach einem oder mehreren der Ansprüche 1 bis 10, wobei an den freien Enden (16, 17) der Elektrodenhalter (12, 13) Elektroden (18, 19) angeordnet sind, dadurch gekennzeichnet, daß die Elektroden (18, 19) mit konischen Anlageflächen (Kegel 47) in entsprechenden Bohrungen (Aufnahmen 48) der Elektrodenhalter (12, 13) gelagert sind, wobei die konischen Anlageflächen (Kegel 47) der Elektroden (18, 19) ein Kegelverhältnis von etwa 1:10 aufweisen.

12. Zange zum Punktschweißen und vorzugsweise für manuelle Betätigung, mit einem Zangengehäuse (11) und zwei darin gelagerten Elektrodenhaltern (12, 13), insbesondere nach einem oder mehreren der Ansprüche 1 bis 11, wobei den Elektrodenhaltern (12, 13) über Schweißkabel (21, 22) Schweißstrom zuführbar ist, dadurch gekennzeichnet, daß die Litzen der Schweißkabel (21, 22) in die hohlen Elektrodenhalter (12, 13) eingeführt und dort durch Quetschung derselben gehalten sind.
